# FASCICULE DE BREVET EUROPEEN

(11) **EP 3 741 642 B1**
(45) Date de publication et mention de la délivrance du brevet: **28.09.2022**
(21) Numéro de dépôt: 20176214.3
(22) Date de dépôt: 24.05.2020
(51) Int. Cl.: B61F 5/52, B61F 7/00, B61H 1/00

(54) **TRAVERSE PIVOT POUR BOGIE RÉVERSIBLE IBERIQUE / UIC AVEC DISPOSITIF DE FREINAGE INTÉGRÉ**
SCHWENK-QUERTRÄGER FÜR UMKEHRBARES IBERISCHES FAHRGESTELL / UIC (INTERNATIONALER EISENBAHNVERBAND) MIT INTEGRIERTER BREMSVORRICHTUNG
BOLSTER FOR IBERIAN REVERSIBLE BOGIE/UIC WITH INTEGRATED BRAKING DEVICE

(30) Priorité: 24.05.2019 FR 1905531
(43) Date de publication de la demande: 25.11.2020
(73) Titulaire: C.G.L., 53960 Bonchamp les Laval (FR)
(72) Inventeur: LELASSEUX, Gérard, 53960 BONCHAMP-LES-LAVAL (FR)
(74) Mandataire: Oudin, Stéphane

(56) Documents cités:
- EP-A1- 1 277 639
- WO-A1-01/85522
- FR-A1- 2 419 203
- FR-A1- 2 719 276
- US-A1- 2006 283 351

## Description

### Domaine technique de l'invention

La présente invention concerne le domaine général des bogies notamment destiné à assurer le maintien de wagons de transport de marchandises et, plus particulièrement, une traverse pivot pour bogie avec freinage intégré.

### Etat de la technique

Dans le domaine du transport de marchandise par voies ferrées, il est connu d'utiliser des bogies avec dispositif de freinage intégré pour le maintien des wagons, dont la structure est, de manière classique, essentiellement constituée de longerons réunis au voisinage de leur milieu par une traverse pivot.

Afin de pouvoir supporter des charges importantes, les longerons ont, en règle générale, une section verticale en forme globale de I ou en double T et sont composés d'une âme, d'une semelle supérieure et d'une semelle inférieure assemblées par soudure et dimensionnées pour supporter lesdites charges.

De même, la traverse pivot comporte classiquement une semelle supérieure sensiblement plane et une semelle inférieure comportant une zone médiane basse plane, deux zones d'extrémités hautes planes et deux zones inclinées planes reliant la zone médiane à chacune des zones d'extrémités, lesdites semelles supérieure et inférieure étant liées entre elles par une pluralités d'entretoises et de renforts. Les semelles sont de forme globalement rectangulaire. Elles comportent un grand côté, dont la direction est perpendiculaire à celle des longerons, et un petit côté dont la direction est parallèle à celle des longerons.

Ce type de bogie est muni d'un dispositif de freinage selon l'un des modes de réalisation suivants :
- un dispositif de freinage actionné depuis le wagon grâce à un actionneur (cylindre et piston actionnés par de l'air comprimé) et une timonerie adaptée supportant et mettant en mouvement des semelles de frein disposées de part et d'autre de chacune des roues des essieux, et
- un dispositif de freinage de conception plus simple, dit intégré, actionné depuis le wagon grâce à de l'air comprimé arrivant depuis ce dernier et un ou deux actionneurs mettant en mouvement deux traverses de liaison disposées de part et d'autre de la traverse pivot du bogie et supportant des semelles de frein venant s'appliquer sur un seul côté des roues du bogie lors du freinage, lesdits actionneurs et traverses de liaison étant disposés dans le bogie.

Ce type de bogie est prévu pour être utilisé sur toutes les voies ferrées notamment d'Europe. Toutefois, il existe deux valeurs de l'écartement entre les rails des voies ferrées européennes. En effet, l'écartement entre les rails des voies ferrées dans la péninsule ibérique est de 1668 millimètres, alors que dans le reste de l'Europe l'écartement entre les rails des voies ferrées est de 1435 millimètres, ce dernier type de voies ferrées est nommé voies ferrées UIC. Par conséquent, à la frontière entre la France et l'Espagne, il est par conséquent nécessaire de changer les essieux des bogies et de déplacer les semelles de frein, afin qu'elles se trouvent en face des roues des essieux. Ce dernier point est particulièrement difficile, voire impossible, à mettre en œuvre avec un dispositif de freinage intégré compte tenu de la configuration des traverses pivots actuelles. Une traverse pivot pour bogie est par exemple connue des documents FR 2 719 276 Al et EP 1 277 639 Al.

### Résumé de l'invention

Le but de la présente invention est donc de pallier les inconvénients précédemment cités et de proposer une traverse pivot pour bogie réversible ibérique/UIC permettant la mise en œuvre d'un dispositif de freinage intégré.

Conformément à l'invention, il est donc proposé une traverse pivot pour bogie réversible Ibérique/UIC avec dispositif de freinage intégré et destiné aux wagons de transport de marchandises, ladite traverse pivot comprenant au moins une semelle supérieure et une semelle inférieure liées entre elles par au moins deux renforts intérieurs, la semelle inférieure comportant une paroi médiane basse plane, deux parois d'extrémités hautes planes et deux parois arrondies, chaque paroi arrondie étant telle que l'arc formé par sa fibre neutre a un rayon de courbure orienté vers le bas de la traverse pivot, et est tangent à la fibre neutre de la paroi d'extrémité associée, la traverse bogie étant caractérisée en ce que les deux parois arrondies relient la paroi médiane à chacune des parois d'extrémités.

L'arc formé par sa fibre neutre de chaque paroi arrondie est de préférence un arc de cercle.

De manière avantageuse, chaque renfort intérieur, de forme globalement rectangulaire, est solidarisé perpendiculairement à l'une des extrémités longitudinales des semelles supérieure et inférieure au droit au moins en partie des parois d'extrémité et arrondie associées de la semelle inférieure et en ce que le bord de l'extrémité longitudinale dudit renfort intérieur située du côté de la paroi médiane de la semelle inférieure est en forme d'arc dont la courbure est inversée par rapport à celle de la paroi arrondie associée de la semelle inférieure.

Chaque paroi arrondie est avantageusement obtenue par croquage.

### Brève description des figures

D'autres avantages et caractéristiques ressortiront mieux de la description qui va suivre d'un mode d'exécution d'une traverse pivot selon l'invention de bogie réversible ibérique/UIC avec un dispositif de freinage intégré, en référence aux figures annexées sur lesquelles :
[Fig 1] est une vue en perspective du dessus d'un bogie réversible Ibérique/UIC avec un dispositif de freinage intégré et une traverse pivot conforme à l'invention,
[Fig 2] est une vue en perspective du dispositif de freinage intégré d'un bogie de la figure 1,
[Fig 3] est une vue de dessus du bogie de la figure 1 en version voies ferrées ibériques,
[Fig 4] est une vue en coupe verticale partielle du bogie selon l'axe IV-IV' de la figure 3,
[Fig 5] est une vue de dessus du bogie de la figure 1 en version voies ferrées UIC,
[Fig 6] est une vue en coupe verticale partielle du bogie selon l'axe VI-VI' de la figure 5,
[Fig 7] est une vue en coupe verticale partielle d'une traverse pivot de l'art antérieur,
[Fig 8] est une vue en coupe verticale partielle d'une traverse pivot conforme à l'invention,
[Fig 9] est une vue en perspective de la traverse pivot conforme à l'invention,
[Fig 10] est une vue en perspective de la traverse pivot de la figure 9 sans la semelle supérieure.

### Description des modes de réalisation

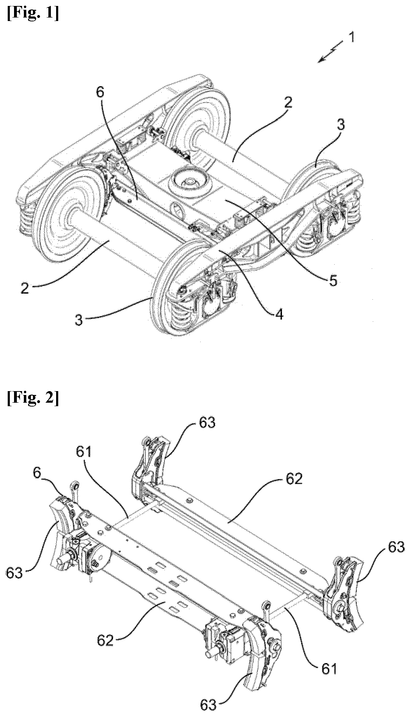

En référence aux figures 1 et 2, on a représenté un bogie 1 destiné aux wagons de transport de marchandises pouvant être réversible Ibérique/UIC, c'est-à-dire pouvant être utilisée sur des voies ferrées ibériques ou sur des voies ferrées UIC, ledit bogie comportant deux essieux 2 munis chacun de deux roues 3, deux longerons 4 solidaires chacun d'une des extrémités desdits essieux 2, une traverse pivot 5 conforme à l'invention et réunissant lesdits longerons 4 au voisinage de leur milieu, et un dispositif de freinage intégré 6.

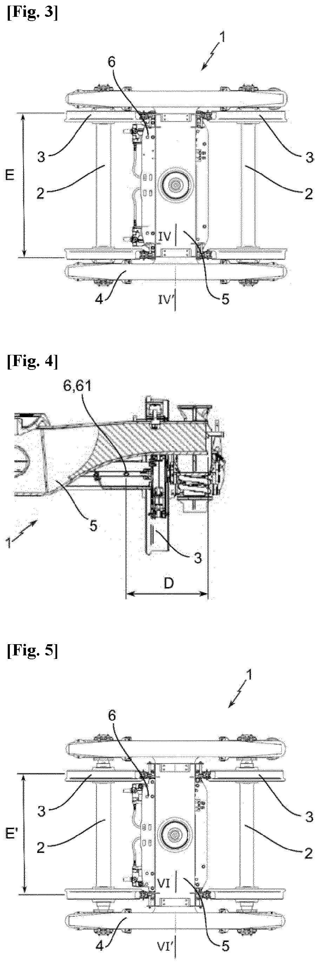

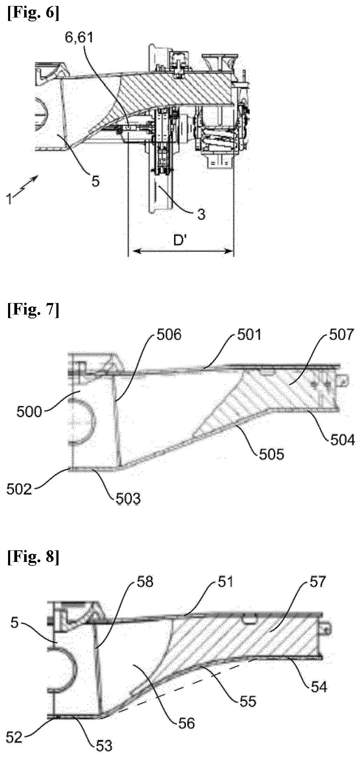

Le dispositif de freinage intégré 6 comprend deux actionneurs 61 reliant deux traverses de liaison 62 disposées de part et d'autre de la traverse pivot 5 du bogie 1 et supportant des semelles de frein 63 venant s'appliquer sur un seul côté des roues 3 de chaque essieu 2 lors du freinage, lesdits actionneurs 61 et traverses de liaison 62 étant disposés dans l'encombrement du bogie 1. On comprend bien que, pour accroitre l'efficacité du freinage, les actionneurs 61 sont avantageusement disposés au plus près des semelles de frein 63, c'est-à-dire à proximité des extrémités longitudinales des traverses de liaison 62. Les deux actionneurs 61 sont de préférence des vérins pneumatiques alimentés par de l'air comprimé provenant du wagon et sont aptes à mettre en mouvement les deux traverses de liaison 62 afin que les semelles de frein 63 viennent exercer une pression sur la bande de roulement des roues 3 de chaque essieu 2 pour obtenir l'arrêt dudit wagon lors du freinage. Avec cette configuration, lesdits actionneurs 61 doivent passer sous la traverse pivot 5 pour relier les deux traverses de liaison 62 (Cf. figures 4 et 6).

Sur les figures 3 et 4, on a représenté le bogie 1 en version voies ferrées ibériques, c'est-à-dire avec un écartement E de 1668 millimètres. Sur la figure 4 on peut constater que l'axe longitudinal de l'actionneur 61 est situé à une distance D de l'extrémité de la traverse pivot 5.

Sur les figures 5 et 6, on a représenté le bogie 1 en version voies ferrées UIC, c'est-à-dire avec un écartement E' de 1435 millimètres. Pour convertir le bogie 1 dans cette version, on comprend bien qu'il faut changer les essieux 2 du bogie 1 et changer les traverses de liaison 62 du dispositif de freinage intégré 6 pour placer les semelles de frein 63 en face des bandes de roulement des roues 3 de chaque essieu 2. Sur la figure 6 on peut alors constater que l'axe longitudinal de l'actionneur 61 est situé à une distance D' de l'extrémité de la traverse pivot 5 plus grande que la distance D pour le bogie 1 en version voies ferrées ibériques.

Dès lors, on comprend bien que pour rendre le bogie 1 avec un dispositif de freinage intégré 6 réversible Ibérique/UIC, il est nécessaire que ledit bogie 1 puisse accepter les 2 configurations représentées aux figures 3 et 5. Pour cela, la forme de la partie inférieure de la traverse pivot 5 du bogie 1 doit être reconsidérée sans pour autant altérer la résistance mécanique de ce dernier.

En effet, sur la figure 7 on a représenté partiellement une traverse pivot 500 de l'art antérieur. Cette traverse pivot 500 comporte une semelle supérieure 501 sensiblement plane et une semelle inférieure 502 obtenue par pliage et comprenant une paroi médiane 503 basse plane, deux parois d'extrémités 504 hautes planes et deux parois inclinées 505 planes reliant la paroi médiane 503 à chacune des parois d'extrémités 504, lesdites semelles supérieure 501 et inférieure 502 étant liées entre elles par une pluralités d'entretoises 506 et de renforts 507 intérieurs. Cette traverse pivot 500 de l'art antérieur, bien que très résistante aux contraintes mécaniques, ne permet pas d'intégrer les débattements des actionneurs 61 du dispositif de freinage intégré 6 lors du passage du bogie 1 de la version voies ferrées ibériques à la version voies ferrées UIC notamment.

Pour pallier cet inconvénient, il a été envisagé un mode de réalisation, non représenté sur les figures, d'une traverse pivot différente de la traverse pivot 500 de l'art antérieur précédemment décrite, dans lequel les parois d'extrémités ont été allongées en direction de la paroi médiane de manière à augmenter l'inclinaison des parois inclinées, afin d'augmenter le dégagement sous la traverse pivot. Ce mode de réalisation a été abandonné, car de longs calculs mécaniques par éléments finis ont montré que, dans la zone des plis entre les différentes parois médiane, inclinées et d'extrémité, les contraintes sont trop élevées, même si avec des rayons de pliage importants.

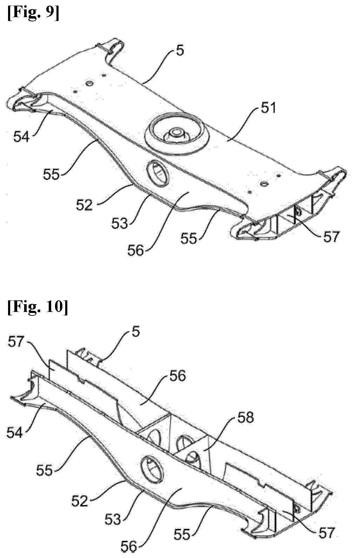

En référence aux figures 8 à 10, afin de limiter les contraintes, la traverse pivot 5 selon l'invention comporte une semelle supérieure 51 sensiblement plane et une semelle inférieure 52 comprenant une paroi médiane 53 basse plane, deux parois d'extrémités 54 hautes planes et deux parois arrondies 55 reliant la paroi médiane 53 à chacune des parois d'extrémités 54, lesdites semelles supérieure 51 et inférieure 52 étant liées entre elles par deux flasques latéraux 56, deux renforts intérieurs 57 et une pluralités d'entretoises 58.

On désigne ici par "paroi arrondie" une paroi dont la fibre neutre forme un arc, et pas uniquement un arc de cercle.

Par ailleurs, chaque paroi arrondie 55 est telle que l'arc formé par sa fibre neutre a un rayon de courbure orienté vers le bas de la traverse pivot 5, et est tangent à la fibre neutre de la paroi d'extrémité 54 associée. Cette configuration évite une concentration de contraintes mécanique à la jonction entre les parois arrondies 55 et d'extrémité 54, c'est-à-dire au niveau de la section la moins épaisse de ladite traverse pivot 5.

On sait qu'il est connu de l'Homme du Métier d'éviter des raccordements abrupts entre la paroi médiane 53 et les parois arrondies 55 afin de limiter les concentrations de contraintes. Toutefois, ces raccordements non abrupts sont de dimensions très réduites et ne s'étendent que peu au-delà de la zone de jonction entre lesdites paroi médiane 53 et arrondies 55. Dans la présente demande, ladite zone de jonction n'est donc en aucun cas une paroi ou une portion de paroi, mais juste un raccordement entre parois qui peut être obtenu par un cordon de soudure ou encore par pli de pliage ou croquage formant un petit arc dont le rayon de courbure orienté vers le haut de la traverse pivot 5.

Dès lors, si on excepte ces zones de jonction très localisées, on comprend bien que la paroi 55 est totalement arrondie et telle que sa fibre neutre forme un arc dont le rayon de courbure orienté vers le bas de la traverse pivot 5.

Cette configuration permet d'augmenter le dégagement sous la traverse pivot 5 (Cf. position du dessous de la traverse pivot 500 de l'art antérieur représenté en pointillé sur la figure 8) et donc d'intégrer les débattements des actionneurs 61 du dispositif de freinage intégré 6 lors du passage du bogie 1 de la version voies ferrées ibériques à la version voies ferrées UIC. Par ailleurs, la forme en arc de la fibre neutre de chaque parois arrondies 55 permet de supprimer les changements brutaux de sections de sorte à limiter les concentrations de contraintes, et donc de ne pas dégrader la résistance mécanique de la traverse pivot 5 et du reste du bogie 1, ladite traverse pivot 5 d'un bogie 1 de wagon fret devant résister à de fortes contraintes de torsion.

La forme des parois arrondies 55 de la semelle inférieure 52 de la traverse pivot 5 peut être obtenue par différents procédés de fabrication tels que, par exemple, le croquage ou le cintrage sur rouleuse. De même, cette forme pourra être à rayon de courbure constant ou variable, sans sortir du cadre de la présente invention.

Selon un mode de réalisation préféré, la forme des parois arrondies 55 de la semelle inférieure 52 de la traverse pivot 5 est à rayon de courbure constant et obtenue par croquage, c'est-à-dire que ladite forme des parois arrondies 55 est obtenue par une succession de petites facettes planes, est telle que sa fibre neutre forme un arc de cercle. Par ailleurs, chaque renfort intérieur 57, de forme globalement rectangulaire, est solidarisé perpendiculairement à l'une des extrémités longitudinales des semelles supérieure 51 et inférieure 52 au droit au moins en partie des parois d'extrémité 54 et arrondie 55 associées de la semelle inférieure 52. Le bord de l'extrémité longitudinale de chaque renfort intérieur 57 située du côté de la paroi médiane 53 de la semelle inférieure 52 est avantageusement en forme d'arc dont la courbure est inversée par rapport à celle de la paroi arrondie 55 associée de la semelle inférieure 52. Cette forme spécifique du bord de l'extrémité longitudinale de chaque renfort intérieur 57 permet à ce dernier de s'étendre sur presque la totalité de la paroi arrondie 55 associée de la semelle inférieure 52 pour accroître la résistance mécanique de la traverse pivot 5 selon l'invention tout en limitant la masse de cette dernière.

L'homme du Métier n'aura aucune difficulté pour choisir un matériau adapté et déterminer les dimensions des différents éléments constitutifs de la traverse pivot 5 selon l'invention en fonction desdites charges à supporter ou des exigences particulières telles que, par exemple, les dimensions du dispositif de freinage intégré. La traverse pivot 5 conforme à l'invention trouve une application particulière pour les bogies 1 réversibles Ibérique/UIC avec dispositif de freinage intégré, destiné aux wagons de transport de marchandises. Toutefois, il est évident que la travers pivot 5 peut être incorporée à tout autre type connu de bogie.

Enfin, il va de soi que les exemples de traverses pivots 5 conformes à l'invention qui viennent d'être décrits ne sont que des illustrations particulières, en aucun cas limitatives de l'invention.

## Revendications

1. Traverse pivot (5) pour bogie (1) réversible Ibérique/UIC avec dispositif de freinage intégré (6) et destiné aux wagons de transport de marchandises, ladite traverse pivot (5) comprenant au moins une semelle supérieure (51) et une semelle inférieure (52) liées entre elles par au moins deux renforts intérieurs (57), la semelle inférieure (52) comportant une paroi médiane (53) basse plane, deux parois d'extrémités (54) hautes planes et deux parois arrondies (55), chaque paroi arrondie (55) étant telle que l'arc formé par sa fibre neutre a un rayon de courbure orienté vers le bas de la traverse pivot (5), et est tangent à la fibre neutre de la paroi d'extrémité (54) associée, la traverse pivot (5) étant **caractérisée en ce que** les deux parois arrondies (55) relient la paroi médiane (53) à chacune des parois d'extrémités (54).

2. Traverse pivot (5) selon la revendication 1 **caractérisée en ce que** l'arc formé par sa fibre neutre de chaque paroi arrondie (55) est un arc de cercle.

3. Traverse pivot (5) selon l'une quelconque des revendications 1 ou 2 **caractérisée en ce que** chaque renfort intérieur (57), de forme globalement rectangulaire, est solidarisé perpendiculairement à l'une des extrémités longitudinales des semelles supérieure (51) et inférieure (52) au droit au moins en partie des parois d'extrémité (54) et arrondie (55) associées de la semelle inférieure (52) et **en ce que** le bord de l'extrémité longitudinale dudit renfort intérieur (57) située du côté de la paroi médiane (53) de la semelle inférieure (52) est en forme d'arc dont la courbure est inversée par rapport à celle de la paroi arrondie (55) associée de la semelle inférieure (52).

4. Traverse pivot (5) selon l'une quelconque des revendications 1 à 3 **caractérisée en ce que** chaque paroi arrondie (55) est obtenue par croquage.

## Patentansprüche

1. Schwenk-Querträger (5) für umkehrbares iberisches Fahrgestell/UIC (Internationaler Eisenbahnverband) (1) mit integrierter Bremsvorrichtung (6) und bestimmt für Güterbeförderungswagen, wobei der Schwer-Querträger (5) mindestens einen oberen Flansch (51) und einen unteren Flansch (52) umfasst, die durch mindestens zwei innere Verstärkungen (57) miteinander verbunden sind, wobei der untere Flansch (52) eine niedrige flache Mittelwand (53), zwei hohe flache Endwände (54) und zwei abgerundete Wände (55) umfasst, wobei jede abgerundete Wand (55) derart ist, dass der Bogen, der durch ihre neutrale Faser gebildet wird, einen Krümmungsradius aufweist, der zum Boden des Schwenk-Querstücks (5) ausgerichtet ist, und die neutrale Faser der zugeordneten Endwand (54) tangiert, wobei der Schwenk-Querträger (5) **dadurch gekennzeichnet ist, dass** die beiden abgerundeten Wände (55) die Mittelwand (53) mit jeder der Endwände (54) verbindet.

2. Schwenk-Querträger (5) nach Anspruch 1, **dadurch gekennzeichnet, dass** der durch seine neutrale Faser jeder abgerundeten Wand (55) gebildete Bogen ein Kreisbogen ist.

3. Schwenk-Querträger (5) nach einem der Ansprüche 1 oder 2, **dadurch gekennzeichnet, dass** jede innere Verstärkung (57) von allgemein rechteckiger Form senkrecht an einem der Längsenden des oberen (51) und des unteren (52) Flanschs befestigt ist, wobei sie zumindest teilweise im Bereich einer Linie mit den dem unteren Flansch (52) zugeordneten Stirn- (54) und abgerundeten (55) Wänden liegt, und dadurch, dass die Kante des Längsendes der inneren Verstärkung (57), die sich neben der Mittelwand (53) des unteren Flansches (52) befindet, in Form eines Bogens ist, dessen Krümmung in Bezug auf die der dem unteren Flansch (52) zugeordneten abgerundeten Wand (55) umgekehrt ist.

4. Schwenk-Querträger (5) nach einem der Ansprüche 1 bis 3, **dadurch gekennzeichnet, dass** jede abgerundete Wand (55) durch Anbiegen erhalten wird.

## Claims

1. A bolster (5) for an Iberian reversible bogie/UIC (1) with an integrated braking device (6) and intended for goods transport wagons, said bolster (5) comprising at least one upper flange (51) and one lower flange (52) linked together by at least two internal reinforcements (57), the lower flange (52) including a planar low middle wall (53), two planar high end walls (54) and two rounded walls (55), each rounded wall (55) being such that the arc formed by its neutral fibre has a radius of curvature directed towards the bottom of the bolster (5), and is tangent to the neutral fibre of the associated end wall (54), the bolster (5) being **characterised in that** the two rounded walls (55) connect the middle wall (53) to each of the end walls (54) .

2. The bolster (5) according to claim 1, **characterised in that** the arc formed by its neutral fibre of each rounded wall (55) is a circle arc.

3. The bolster (5) according to any one of claims 1 or 2, **characterised in that** each internal reinforcement (57), with a generally rectangular shape, is secured perpendicularly to one of the longitudinal ends of the upper (51) and lower (52) flanges in line at least partially with the associated end (54) and rounded (55) walls of the lower flange (52) and **in that** the edge of the longitudinal end of said internal reinforcement (57) located on the side of the middle wall (53) of the lower flange (52) is in the form of an arc whose curvature is reversed with respect to that of the rounded wall (55) associated with the lower flange (52) .

4. The bolster (5) according to any one of claims 1 to 3, **characterised in that** each rounded wall (55) is obtained by crunching.
